# EUROPÄISCHE PATENTSCHRIFT

(11) **EP 2 255 164 B1**
(45) Veröffentlichungstag und Bekanntmachung des Hinweises auf die Patenterteilung: **04.03.2015**
(21) Anmeldenummer: 09723310.0
(22) Anmeldetag: 09.03.2009
(51) Int. Cl.: B63B 11/04, G01F 23/292, G01K 11/32

(54) **SCHIFF MIT EINER VORRICHTUNG ZUR TANKÜBERWACHUNG**
SHIP WITH A DEVICE FOR MONITORING TANKS
NAVIRE AVEC DISPOSITIF DE SURVEILLANCE DES CITERNES

(30) Priorität: 18.03.2008 DE 102008014745
(43) Veröffentlichungstag der Anmeldung: 01.12.2010
(73) Patentinhaber: Siemens Aktiengesellschaft, 80333 München (DE)
(72) Erfinder: BOSSELMANN, Thomas, 91080 Marloffstein (DE); SCHRÖDER, Dierk, 24238 Selent (DE)
(86) Internationale Anmeldenummer: PCT/EP2009/052725
(87) Internationale Veröffentlichungsnummer: WO 2009/115422

(56) Entgegenhaltungen:
- WO-A1-97/36150
- DE-A1- 3 323 032
- GB-A- 2 184 229
- JP-A- 2004 294 375
- US-A- 5 838 437
- US-A1- 2002 025 097
- US-A1- 2008 056 639

## Beschreibung

Die Erfindung betrifft ein Schiff mit einer Vorrichtung zur Tanküberwachung nach dem Oberbegriff des Anspruchs 1. Eine Tanküberwachung ist auf Schiffen von hoher Bedeutung, da die Füllstände der Tanks für eine Vielzahl von Zustandsgrößen eines Schiffes, wie zum Beispiel die Stabilität und die verbleibende Reichweite, von zentraler Bedeutung sind.

Als Beispiel sollen hier die Brennstofftanks auf Seeschiffen betrachtet werden. In der Regel verwenden große Seeschiffe schweres Heizöl (HFO = Heavy Fuel Oil) mit einer Viskosität von bis zu 700 - 900 cSt. bei 20°C. Um dieses schwere Heizöl pumpen zu können, muss es auf eine Temperatur von 50°C bis 60°C gebracht werden. Für den Schiffsbetrieb ist daher eine Kontrolle sowohl des Füllstandes der Brennstofftanks, als auch der Temperatur des Brennstoffs von Bedeutung. Das Schiffregime sieht vor, dass stets ein Teil der Bunkertanks aus Gründen der Energieersparnis nicht beheizt werden, ein Teil der Bunkertanks sich in der Aufheizphase befinden und ein Teil der Bunkertanks auf einer Temperatur gehalten werden, bei der aus ihnen Brennstoff in die Tagestanks gepumpt werden kann.

Zur Zeit gibt es mehrere Arten der Füllstandsüberwachung, die bei Tanks auf Schiffen eingesetzt werden, wie zum Beispiel
- mittels Druckmessdosen,
- mittels kapazitiver Messinstrumente,
- mittels Radar,
- mittels geführter Mikrowellen.

Alle diese Sensoren haben spezifische Nachteile, so dass bei gegebenen Schiffen mehrere unterschiedliche Arten von Sensoren zur Anwendung kommen. Ein Nachteil der genannten Sensoren ist es, dass an einem Tank immer ein relativ großer Flansch angebracht werden muss, um einen Sensor an einer definierten Stelle zu platzieren. Im Fall der Verwendung binärer Sensoren, welche jeweils die Über- bzw. Unterschreitung einer bestimmten Füllhöhe melden sollen, müssen sogar mehrere Sensoren entlang der Seitenwand eines Tanks angebracht werden.

So werden bisher üblicherweise zur Füllstandsüberwachung in die Seitenwand eines Bunkertanks 3 Sensoren (High Level, Low Level, Low Low Level) zur Alarmierung sowie beispielsweise Druckmessdosen als analoge Sensoren eingebaut. Mitunter wird auch an der Tankdecke ein System zur analogen Füllstandsmessung (Ultraschall, Radar, kapazitiv) installiert. Für die Temperaturmessung werden geeignete Temperatursensoren durch die Tankseitenwand hindurch installiert. Allen Systemen ist gemeinsam, dass die Möglichkeit ihrer Installation von der Zugänglichkeit des jeweiligen Installationsortes abhängt.

DE 33 23 032 A1 offenbart ein Schiff mit einer Vorrichtung zur Überwachung der Füllhöhe und einer Einrichtung zur Regelung der Temperatur einer Flüssigkeit in einem Schiffstank. GB 2 184 229 offenbart eine Vorrichtung zur Überwachung der Füllhöhe einer Flüssigkeit in einem Tank, wobei anhand des in einer optischen Faser zurückgestreuten Lichts die Füllhöhe ermittelt wird.

Es ist daher die Aufgabe der Erfindung, eine neue und zweckmäßige Vorrichtung zur Tanküberwachung auf einem Schiff zu schaffen, welche die Nachteile der herkömmlichen Tanksensorik überwindet, d.h. die Installation an einem Tank vereinfacht und dennoch ausreichende Messgenauigkeit und Zuverlässigkeit bietet.

Diese Aufgabe wird erfindungsgemäß durch ein Schiff mit einer Vorrichtung mit den Merkmalen des Anspruchs 1 gelöst. Vorteilhafte Ausgestaltungen sind in den Unteransprüchen angegeben.

Erfindungsgemäß wird zur Tanküberwachung auf einem Schiff ein aus einem Lichtwellenleiter bestehender Sensor eingesetzt, entlang dessen an mindestens einer vorbestimmten Position eine Messstelle ausgebildet ist, an der sich in dem Lichtwellenleiter ausbreitendes Licht entgegen seiner ursprünglichen Ausbreitungsrichtung zurückgestreut wird. Durch eine geeignete Lichtquelle wird Licht in den Lichtwellenleiter eingestrahlt. Die Signalverarbeitungseinrichtung weist eine Recheneinrichtung zur Auswertung einer charakteristischen Eigenschaft des an der mindestens einen Messstelle zurückgestreuten Lichtes auf. Der Lichtwellenleiter ist in dem Tank so angeordnet, dass die Anzahl derjenigen Messstellen, die sich unterhalb des Flüssigkeitsspiegels einer in dem Tank enthaltenen Flüssigkeit befinden, von der Füllhöhe des Tanks abhängt. Indem die charakteristische Eigenschaft des an der einer Messstelle zurückgestreuten Lichtes davon beeinflusst wird, ob sich die Messstelle, oberhalb oder unterhalb des Flüssigkeitsspiegels befindet, erlaubt die Auswertung dieser Eigenschaft eine Aussage über die Füllhöhe. Die Signalverarbeitungseinrichtung leitet aus einem von dem Sensor abgegebenen Signal zusätzlich mindestens ein Signal ab, welches eine Temperatur in dem Tank anzeigt.

Obgleich auch mit einer einzigen Messstelle bereits eine binäre Aussage über die Füllhöhe des Tanks getroffen werden kann, nämlich ob sie oberhalb oder unterhalb dieser Messstelle liegt, ist es zweckmäßig, dass entlang des Lichtwellenleiters eine Vielzahl von Messstellen an vorbestimmten Positionen ausgebildet sind, um eine genauere Messung der Füllhöhe zu ermöglichen.

Jede Messstelle wird vorteilhaft durch ein Bragg-Gitter mit einer Gitterperiode d gebildet, die für die Messstelle charakteristisch bzw. unterschiedlich ist. Dementsprechend weist die Signalverarbeitungseinrichtung einen Analysator auf, der als charakteristische Eigenschaft des zurückgestreuten Lichtes dessen spektrale Zusammensetzung ermittelt, um eine spektrale Identifikation des von jeder einzelnen Messstelle herrührenden Anteils des insgesamt zurückgestreuten Lichtes zu ermöglichen. Insbesondere werden bis zu 10 Messstellen entlang eines Lichtwellenleiters mit Bragg-Gittern unterschiedlicher Gitterperioden d vorgesehen. Eine hier vorzugsweise eingesetzte Lichtquelle weist insbesondere eine ausreichend große spektrale Bandbreite auf, um die spektrale Bandbreite der Bragg-Gitter sowie des von diesen rückreflektierten Lichts abdecken zu können.

Es hat sich aber ebenso bewährt, wenn jede Messstelle durch ein Bragg-Gitter mit gleicher oder im wesentlichen gleicher Gitterperiode d gebildet wird, und die Signalverarbeitungseinrichtung einen Analysator aufweist, der als charakteristische Eigenschaft des zurückgestreuten Lichtes dessen spektrale Zusammensetzung ermittelt, und weiterhin eine Auswerteelektronik aufweist, welche eine Laufzeit des zurückgestreuten Lichtes seit der Einstrahlung des Lichts in den Lichtwellenleiter ermittelt. Diese Ausgestaltung ist insbesondere dann von Vorteil, wenn eine größere Anzahl von Messstellen benötigt wird.

In einem solchen Fall wäre bei Verwendung von Bragg-Gittern mit unterschiedlichen Gitterperioden d eine Lichtquelle mit einer spektralen Bandbreite erforderlich, die sich aus der spektralen Bandbreite der vorhandenen Sensoren und die durch eine Temperaturänderung zu erwartenden Verschiebungen der spektralen Intensitätsverteilungen des von den vorhandenen Sensoren rückreflektierten Lichts ergibt. Bereits bei beispielsweise einer Anzahl von mehr als 10 Messstellen kann es gegebenenfalls bei einem Einsatz von Bragg-Gittern mit unterschiedlichen Gitterperioden d schwierig werden, eine Lichtquelle mit geeigneter spektraler Bandbreite bereitzustellen.

Die Positionen von Bragg-Gittern mit gleicher oder sehr ähnlicher Gitterperiode d kann allerdings entlang eines Lichtwellenleiters nicht allein mittels Auswertung der Verschiebungen der spektralen Intensitätsverteilungen des von den vorhandenen Sensoren rückreflektierten Lichts aufgelöst werden, da die rückreflektierten verschobenen Wellenlängenbereiche aller sich unterhalb des Flüssigkeitsspiegels angeordneter Sensoren in etwa gleichen. Dazu ist es weiterhin erforderlich, die Laufzeit eines in den Lichtwellenleiter entsandten Lichts oder Lichtpulses seit der Einstrahlung des Lichts in den Lichtwellenleiter bis zur Rückkehr eines gegenüber den rückreflektierten Wellenlängenbereichen verschobenen Wellenlängenbereichs zu ermitteln. Die ermittelte Laufzeit kann einer bestimmten Messstelle zugeordnet werden, wobei diese Messstelle einem Füllstand im Tank zuordenbar ist. Die Ausgestaltung von Messstellen durch Bragg-Gitter mit gleicher oder im Wesentlichen gleicher Gitterperiode d ist insbesondere dann von Vorteil, wenn eine große Anzahl von Messstellen, insbesondere mehr als 10 Messstellen, vorzugsweise mehr als 50 Messstellen, benötigt werden. Als Lichtquelle eignet sich hierbei jede Lichtquelle, insbesondere aber eine gepulste und/oder monochromatische Lichtquelle, bevorzugt in Form eines Lasers oder einer LED-Lichtquelle.

Da die an einem Bragg-Gitter zurückgestreute charakteristische Wellenlänge wegen der thermischen Längenänderung des Lichtwellenleiters von der Temperatur abhängt, kann aus besagter Wellenlänge darauf geschlossen werden, ob ein Bragg-Gitter von Flüssigkeit umgeben ist oder nicht, wenn die Flüssigkeit aufgrund einer Beheizung, wie sie in mit Brennstoff beladenen Bunkertanks von Schiffen vorkommt, eine höhere Temperatur als die Umgebung aufweist. Andernfalls kann eine Temperaturänderung bei einer in eine Flüssigkeit eingetauchten Lage eines Bragg-Gitters durch eine Beheizung des gesamten Lichtwellenleiters herbeigeführt werden. In diesem Fall sorgt die erhöhte Wärmeübertragung durch die Flüssigkeit für eine Temperaturabsenkung des eingetauchten Bragg-Gitters.

-Zur Messung der Füllhöhe eines Tanks ist der Lichtwellenleiter in dem Tank so angeordnet, dass die Anzahl der Bragg-Gitter, die sich unterhalb des Flüssigkeitsspiegels einer in dem Tank enthaltenen Flüssigkeit befinden, von der Füllhöhe abhängt. Dadurch wird eine Messung der Füllhöhe ermöglicht, wobei die Auflösung durch die Anzahl der Bragg-Gitter und deren Abstände gegeben ist.

Durch den Einsatz eines Lichtwellenleiters als Sensor kann im Vergleich zum Stand der Technik das Problem der Einschränkung der Platzierung von Sensoren an einem Tank durch die Zugänglichkeit der dafür vorgesehenen Stellen entschärft und die Größe der für die Anbringung von Sensoren benötigten Durchbrüche (Flansche) in den Tankwänden verringert werden. Ein Lichtwellenleiter, insbesondere in Form eines Glasfaserkabels, kann an einer beliebigen Stelle in einen Tank eingeführt werden und braucht in dem Tank nur so verlegt zu werden, dass sich eine sinnvolle Messanordnung ergibt. Dabei kann der Verlauf des Glasfaserkabels in dem Tank durch einen Trägerkörper vorgegeben werden, an dem das Glasfaserkabel entlanggeführt wird.

Dabei hat es sich bewährt, wenn ein Glasfaserkabel lediglich in den Tank hinein, aber nicht wieder heraus geführt wird. Ein Ende des Glasfaserkabels verbleibt dabei im Tank. Dies spart Platz und erleichtert den Einbau und gegebenenfalls Austausch eines solchen Kabels.

Durch eine geeignete räumliche Anordnung eines Glasfaserkabels in einem Tank kann erfindungsgemäß eine Füllstandsmessung und eine Temperaturmessung gemeinsam durchgeführt werden, da die Füllstandsmessung erst durch eine Auswertung der gemessenen Temperaturverteilung entlang des Glasfaserkabels erfolgt und die Temperaturwerte somit bei der Füllstandsmessung als Zwischenergebnisse ohnehin anfallen. Dies ist ein besonderer Vorteil der Erfindung, da bei Tanks an Bord von Schiffen in der Regel beide Zustandsgrößen überwacht werden müssen, wozu nach dem Stand der Technik getrennte Sensoren für beide Größen vorgesehen werden müssen. Aufgrund der eingangs erwähnten Notwendigkeit, den üblichen Brennstoff HFO für die Entnahme zu erwärmen, gilt dies insbesondere für die Brennstofftanks eines Schiffes.

Die Messung ist nicht abhängig von den örtlichen Gegebenheiten der Einführung des Glasfaserkabels in den Tank, so dass stets der jeweils günstigste Ort für den Zugang gewählt werden kann. Es ist auch möglich die Glasfaser in eine vorinstallierte Hülle einzuführen. Dies hat den Vorteil, dass die Glasfaser im Bedarfsfall, d.h. bei Auftreten eines Defekts, ohne Medienkontakt getauscht werden kann. Ferner ergibt sich die Möglichkeit, solche Hüllen zwecks Referenzmessungen zu installieren. Aufgrund der geringen Dicke von Glasfasern und ihrer großen Flexibilität können diese auch bei komplizierten Anordnungen deutlich leichter installiert werden als konventionelle Messanordnungen.

Erfindungsgemäß übernimmt ein einziges Glasfaserkabel sowohl durch die darin eingearbeiteten Bragg-Gitter die Funktion mehrerer einzelner Sensorelemente, als auch gleichzeitig die Funktion einer Verbindungsleitung zwischen den einzelnen Sensorelementen und der Signalverarbeitungseinrichtung. Dabei verläuft diese Verbindungsleitung nicht sternförmig, sondern die einzelnen Sensorelemente und die Signalverarbeitungseinrichtung sind an ihr gleichsam wie an einer Busleitung angeordnet und die Kommunikation zwischen jedem einzelnen Sensorelement und der Signalverarbeitungseinrichtung erfolgt zueinander zeitgleich im Frequenzmultiplexverfahren.

Ein weiterer Vorteil der Erfindung ist die Unempfindlichkeit von Lichtwellenleiterkabeln gegenüber der Einstreuung elektromagnetischer Störungen, einem Problem, dass im modernen Schiffbau verstärkt auftritt.

Nachfolgend wird ein Ausführungsbeispiel der Erfindung anhand der Zeichnungen beschrieben. In diesen zeigt
- Fig.1: eine schematische Heckansicht eines Schiffs mit einer beispielhaften Anordnung von Brennstofftanks,
- Fig.2: eine schematische Seitenansicht des Schiffs von Fig. 1,
- Fig.3: eine schematische Draufsicht auf das Schiff von Fig. 1,
- Fig.4: den schematischen Aufbau einer erfindungsgemäßen Messanordnung,
- Fig.5: einen vergrößerten Ausschnitt aus einem Lichtwellenleiter mit integriertem Bragg-Gitter,
- Fig.6: eine spektrale Intensitätsverteilung einer breitbandagen Lichtquelle und
- Fig.7: das Funktionsprinzip eines erfindungsgemäßen Sensors.

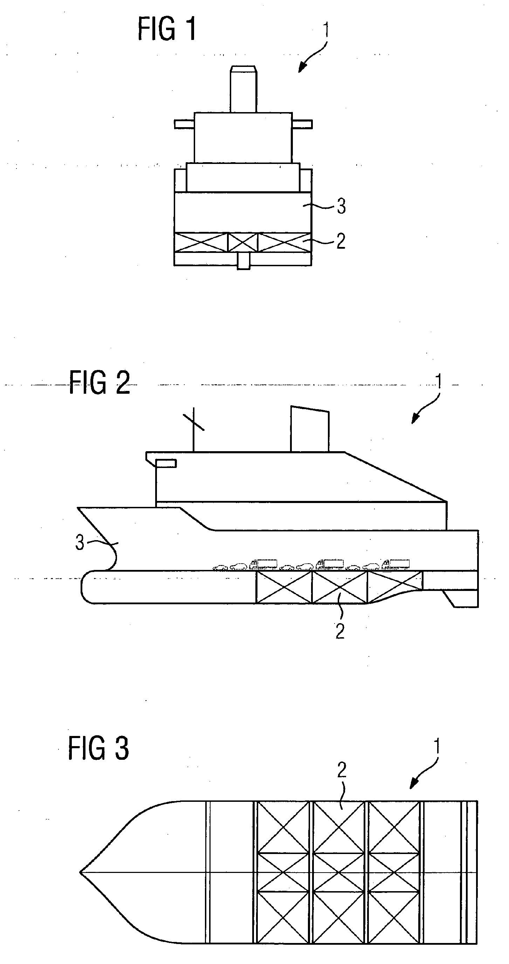

Die Figuren 1 bis 3 zeigen am Beispiel einer Fähre 1 die Anordnung von Bunkertanks 2 für Brennstoff in einem Schiff. Die Bunkertanks 2, in denen der Brennstoff mitgeführt wird, sind in üblicher Weise durch diagonale gestrichelte Linien gekennzeichnet. Die Fähre 1 verfügt in diesem Beispiel über insgesamt neun Bunkertanks 2, die unterhalb des Fahrzeugdecks 3 nebeneinander in einer 3x3-Matrix angeordnet sind.

Es leuchtet ein, dass die Zugänglichkeit der Bunkertanks 2 in diesem Bereich des Schiffes 1 eingeschränkt ist. Dies gilt insbesondere für die in Längsrichtung des Schiffes 1 verlaufenden Seitenwände der Tanks 2. Insofern ist es offensichtlich problematisch, wenn zur Füllstands- und/oder Temperaturmessung mehrere Flansche an den Seitenwänden der Tanks 2 angebracht werden müssen, um für Sensoren an verschiedenen Stellen Zugänge zu den Innenräumen der Tanks 2 zu schaffen. Im Übrigen erfordert jeder Flansch eine Öffnung in der Tankwand und stellt damit eine potentielle Leckstelle dar.

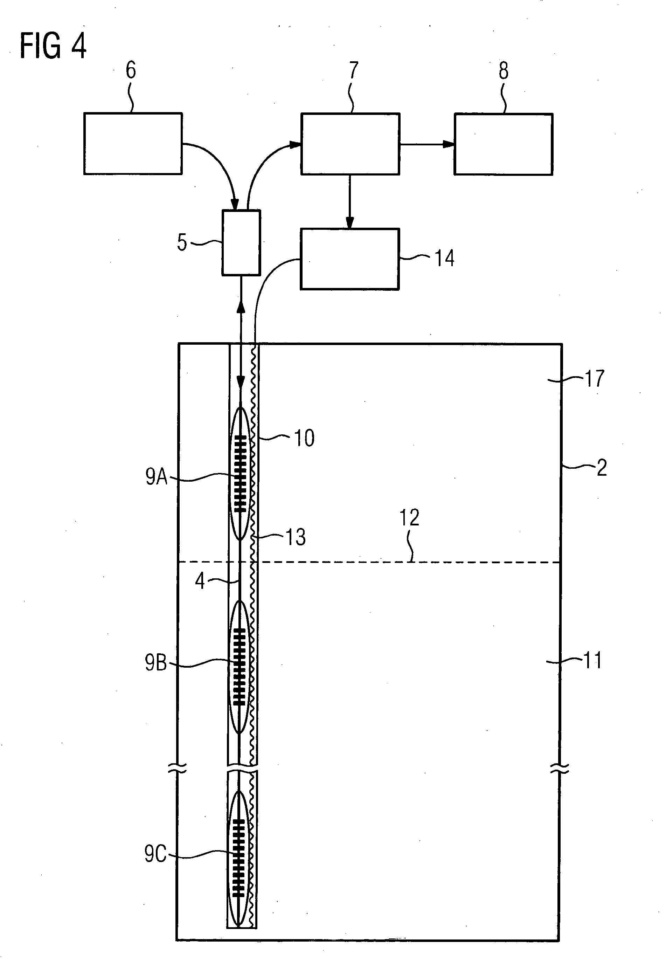

Erfindungsgemäß wird zur Füllstandsmessung ein Lichtwellenleiter, vorzugsweise in Form eines flexiblen Glasfaserkabels eingesetzt, mit dem eigentlich zunächst eine Temperaturmessüng vorgenommen wird. Von der Temperatur wird dann auf den Füllstand geschlossen. Eine schematische Darstellung der Messanordnung zeigt Fig. 4.

Der Lichtwellenleiter 4 ist über einen optischen Richtkoppler 5 mit einer Lichtquelle 6 und mit einer Signalverarbeitungseinrichtung 7 verbunden. Der Richtkoppler 5 koppelt von der Lichtquelle 6 abgestrahltes Licht in den Lichtwellenleiter 4 ein und aus diesem zurückgestreutes Licht zu der Signalverarbeitungseinrichtung 7 aus. Der Signalverarbeitungseinrichtung 7 ist eine Anzeigeeinheit 8 nachgeschaltet.

Entlang des Lichtwellenleiters 4 sind in diesem an vorbestimmten Positionen eine Vielzahl von Bragg-Gittern, mit gleichen oder untereinander verschiedenen Gitterperioden d ausgebildet. Werden Bragg-Gitter mit unterschiedlichen Gitterperioden d eingesetzt, so wird bevorzugt eine breitbandig abstrahlende Lichtquelle 6 eingesetzt. Werden dagegen Bragg-Gitter mit gleichen oder im Wesentlichen gleichen Gitterperioden d eingesetzt, so wird vorzugsweise eine gepulste, monochromatische Lichtquelle 6 eingesetzt.

Rein beispielhaft sind in Fig. 4 drei Bragg-Gitter 9A, 9B und 9C dargestellt. Der Lichtwellenleiter 4 ist in ein dünnwandiges Rohr 10 aus Metall oder aus Kunststoff eingeführt, welches vertikal in einem Brennstoff 11 enthaltenden Tank 2 angeordnet ist. Ein Teil des Lichtwellenleiters 4 befindet sich unterhalb des Flüssigkeitsspiegels 12 des Brennstoffs 11. Folglich befindet sich auch ein Teil der Bragg-Gitter 9A, 9B und 9C unterhalb des Flüssigkeitsspiegels 12. In dem gezeigten Beispiel sind dies die Bragg-Gitter 9B und 9C.

In dem Rohr 10 ist außerdem noch eine Heizvorrichtung 13 angeordnet, die von einer Energiequelle 14 versorgt wird. Die Heizvorrichtung 13 kann beispielsweise ein Heizdraht sein, der entlang der Innenwand des Rohres 10 angebracht ist. Die Energiequelle 14 kann bei Bedarf von der Signalverarbeitungseinrichtung 7 aus aktiviert werden, worauf später noch näher eingegangen wird. Bei Aktivierung der Energiequelle 14 erwärmt die Heizvorrichtung 13 den Lichtwellenleiter 4 gleichmäßig entlang seiner gesamten Länge.

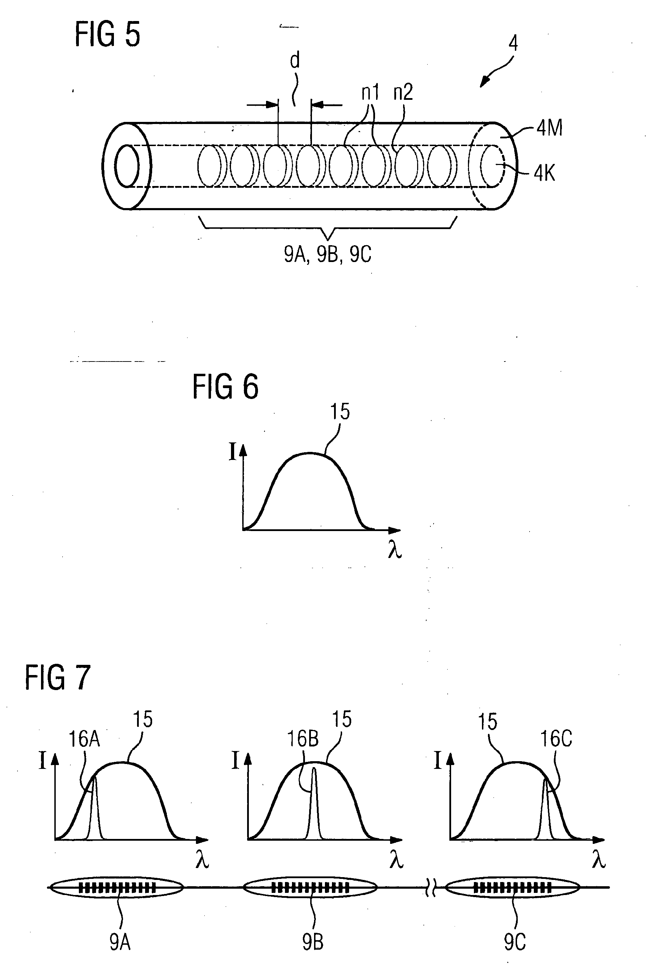

Das Funktionsprinzip eines erfindungsgemäßen Sensors veranschaulichen die Figuren 5 bis 7. Von diesen zeigt Fig. 5 eine vergrößerte schematische Darstellung eines Abschnitts des aus einem Kern 4K und einem Mantel 4M bestehenden Lichtwellenleiters 4, und zwar eines Abschnitts, in dem ein Bragg-Gitter 9A, 9B oder 9C ausgebildet ist. Dieses besteht aus einer periodischen Folge von scheibenförmigen Bereichen, die einen von dem normalen Brechungsindex n₂ des Kerns 4K abweichenden Brechungsindex n₁ aufweisen. Die Periode des Gitters 9A, 9B oder 9C ist in Fig. 5 mit d gekennzeichnet und kann für die Gitter 9A, 9B, 9C gleich oder unterschiedlich gewählt sein.

Wird in Bragg-Gitter 9A, 9B oder 9C, die beispielsweise unterschiedliche Gitterperioden d aufweisen, Licht mit einer breitbandigen Verteilung 15 der Intensität I über der Wellenlänge λ, wie sie Fig. 6 zeigt, eingestrahlt, dann wird ein geringer Teil des Lichtes an den Bragg-Gittern 9A, 9B und 9C zurückgestreut, und zwar mit einer jeweils charakteristischen spektralen Intensitätsverteilung 16A, 16B und 16C, die von der Gitterperiode d des jeweiligen Gitters 9A, 9B oder 9C abhängt. Wie Fig. 7 erkennen lässt, ist die Wellenlänge λ des zurückgestreuten Lichtes umso größer, je größer die Gitterperiode d ist.

Eine lokale Temperaturänderung des Lichtwellenleiters 4 im Bereich eines Bragg-Gitters 9A, 9B oder 9C führt zu einer lokalen Längenexpansion oder -kontraktion und damit zu einer Änderung der Gitterperiode d, was eine Verschiebung der spektralen Intensitätsverteilung 16A, 16B oder 16C des zurückgestreuten Lichtes zur Folge hat. Das Ausmaß dieser Verschiebung ist ein Maß für die Längenänderung und damit für die Temperaturänderung.

Die in der Messanordnung von Fig. 4 vorgesehene Signalverarbeitungseinrichtung 7 enthält einen Spektralanalysator zur Ermittlung der spektralen Verteilung des von den einzelnen Bragg-Gittern 9A, 9B und 9C zurückgestreuten Lichtes und eine Recheneinrichtung, welche das Ausmaß der jeweiligen Verschiebung gegenüber einer Referenzlage ermittelt und in eine Temperaturänderung gegenüber einer Referenztemperatur, bei der die spektrale Verteilung die Referenzlage hat, umrechnet. Dies geschieht für jedes einzelne Bragg-Gitter 9A, 9B und 9C, so dass auf diese Weise die Verteilung der Temperatur entlang des gesamten Lichtwellenleiters 4 an den mit Bragg-Gittern 9A, 9B und 9C versehenen Stellen erhalten wird.

Bei Verwendung von Bragg-Gittern mit gleicher oder im Wesentlichen gleicher Gitterperiode d weist die Signalverarbeitungsvorrichtung 7 zusätzlich eine Auswerteelektronik auf, welche die Laufzeit des rückgestreuten Lichts mit veränderter spektraler Intensitätsverteilung erfasst und auswertet.

Wie eingangs erwähnt, werden auf Schiffen Bunkertanks 2, aus denen gerade Brennstoff 11 entnommen wird, beheizt, so dass der Brennstoff 11 in diesem Fall eine gegenüber der Umgebung deutlich erhöhte Temperatur aufweist, die auch von der Temperatur der Luft in dem Raum 17 oberhalb des Flüssigkeitsspiegels 12 abweicht, d.h. gegenüber dieser erhöht ist. Somit ergibt sich auf der Höhe des Flüssigkeitsspiegels 12 eine Stufe in der Temperaturverteilung. Die Recheneinrichtung der Signalverarbeitungseinrichtung 7 ermittelt die Lage dieser Stufe und ordnet ihr an hand der bekannten Positionen der Bragg-Gitter 9A, 9B und 9C entlang des Lichtwellenleiters 4 und dessen bekannter Anordnung innerhalb des Tanks 2 eine vertikale Position bezüglich des Tanks zu, die als Füllstand an der Anzeigeeinheit 8 ausgegeben wird. Die Heizvorrichtung 13 wird in diesem Fall nicht benötigt und bleibt daher außer Betrieb.

Falls der Füllstand eines Tanks 2 überwacht werden soll, in dem der Brennstoff 11 nicht beheizt wird, so dass dessen Temperatur nicht signifikant von der Umgebungstemperatur abweicht, dann wird die Energiequelle 14 aktiviert und gibt Leistung an die Heizvorrichtung 13 ab, was zu einer Erwärmung des Lichtwellenleiters 4 gegenüber der seiner Umgebung führt. Unterhalb des Flüssigkeitsspiegels 12 leitet der Brennstoff 11 aufgrund seiner höheren Wärmekapazität die von der Heizvorrichtung 13 ausgehende Wärmeleistung besser von dem Rohr 10 ab als die Luft in dem Raum 17 oberhalb des Flüssigkeitsspiegels 12, so dass sich auch in diesem Fall auf der Höhe des Flüssigkeitsspiegels 12 eine Temperaturstufe ergibt. Allerdings liegt in diesem Fall die Temperatur unterhalb des Flüssigkeitsspiegels 12 niedriger als oberhalb.

Vorteilhaft ist es hierbei, wenn die von der Heizvorrichtung 13 abzugebende Wärmeleistung einstellbar ist. Die Wärmeleistung kann in diesem Fall an die thermischen Materialparameter der Flüssigkeit 11 so angepasst werden, dass sich in dem Lichtwellenleiter 4 eine von der Signalverarbeitungseinrichtung 7 sicher detektierbare Temperaturstufe einstellt, ohne dass ein unnötiges Übermaß an Leistung umgesetzt wird. Die Einstellung kann automatisch erfolgen, indem die von der Energiequelle 14 in die Heizvorrichtung 13 eingespeiste Leistung ausgehend von einem relativ niedrigen Ausgangswert so lange schrittweise erhöht wird, bis die Signalverarbeitungseinrichtung 7 entlang des Lichtwellenleiters 4 eine eindeutige Temperaturstufe feststellt.

Die Lage der Temperaturstufe wird von der Recheneinrichtung der Signalverarbeitungseinrichtung 7 ermittelt und wie zuvor beschrieben in ein Maß für den Füllstand umgerechnet und an der Anzeigeeinheit 8 ausgegeben. Es versteht sich von selbst, dass die Funktion der erfindungsgemäßen Messanordnung nicht von der Art der Flüssigkeit abhängt, die in dem Tank 2 enthalten ist, sondern es kann im Prinzip ein Tank 2 mit beliebigem flüssigem Inhalt überwacht werden, also auch ein Ballasttank oder Ladungstank. Ob dabei von der Heizvorrichtung 13 Gebrauch gemacht werden muss oder nicht, hängt davon ab, ob die Temperatur der Flüssigkeit im momentanen Betriebszustand des Schiffes 1 über der Umgebungstemperatur liegt oder nicht.

Die Auflösung der Füllstandsmessung wird durch die Anzahl und die Positionen der Bragg-Gitter entlang des Lichtwellenleiters 4 vorgegeben und ist durch eine geeignete Auslegung an die Erfordernisse des jeweiligen Einsatzfalles anpassbar. Mit den in Fig. 4 gezeigten drei Bragg-Gittern 9A, 9B und 9C ist eine Erfassung von drei Füllstandsstufen möglich, da sich das oberste Bragg-Gitter 9A als Referenz stets oberhalb des Flüssigkeitsspiegels 12 befinden muss. Die oberste erfassbare Stufe ist demnach ein Füllstand zwischen den Gittern 9A und 9B, wie er in Fig. 4 skizziert ist, die mittlere Stufe ein Füllstand zwischen den Gittern 9B und 9C und die unterste Stufe ein Füllstand unterhalb des Gitters 9C, bei dem keine ausgeprägte Temperaturstufe entlang des Lichtwellenleiters 4 mehr feststellbar ist. Die Darstellung von Fig. 4 ist nicht maßstäblich.

Aus der beschriebenen Funktionsweise der erfindungsgemäßen Füllstandsmessung ergibt sich, dass die Temperaturverteilung entlang des Lichtwellenleiters 4 zwangsläufig miterfasst wird. Es ist daher möglich, die gemessenen Temperaturwerte ebenfalls von der Signalverarbeitungseinrichtung 7 an die Anzeigeeinheit 8 zu senden, um sie dort anzuzeigen. Durch die vertikale Verteilung der einzelnen Temperaturmesspunkte in Form der Bragg-Gitter 9A, 9B und 9C über die Höhe des Tanks 2 stellen die erhaltenen Messwerte ein vertikales Temperaturprofil des Tanks 2 dar, dessen Kenntnis beispielsweise bei einem beheizten Brennstofftank, der von der Unterseite her beheizt wird und daher die Ausbildung eines ausgeprägten vertikalen Temperaturgradienten erwarten lässt, von großem Interesse ist.

Während die Füllstandsmessung lediglich auf der Feststellung einer Temperaturstufe basiert, also der Absolutwert der Temperatur keine Rolle spielt, setzt die Temperaturmessung entweder eine Kalibrierung der Messanordnung auf den Absolutwert der Temperatur oder erfindungsgemäß wie in Anspruch 1 angegeben den Einsatz eines zusätzlichen Referenz-sensors voraus, der sich auf gleicher Temperatur wie eines der Bragg-Gitter befindet und ein den Absolutwert der Temperatur anzeigendes Signal liefert.

## Patentansprüche

1. Schiff, insbesondere Seeschiff, umfassend mindestens einen Schiffstank und mindestens eine Schiffstank-Überwachungsvorrichtung zur Überwachung einer Füllhöhe und einer Temperatur einer Flüssigkeit im mindestens einen Schiffstank, wobei die Schiffstank-Überwachungsvorrichtung mindestens einen in oder an dem Schiffstank angeordneten Sensor und eine dem Sensor zugeordnete Signalverarbeitungseinrichtung umfasst, welche aus einem von dem Sensor abgegebenen Signal mindestens ein die Füllhöhe des Schiffstanks anzeigendes Signal ableitet,
**dadurch gekennzeichnet, dass**
der Sensor aus einem Lichtwellenleiter (4) besteht, entlang dessen an mindestens einer vorbestimmten Position eine Messstelle (9A, 9B, 9C) ausgebildet ist, an der sich in dem Lichtwellenleiter (4) ausbreitendes Licht entgegen seiner ursprünglichen Ausbreitungsrichtung zurückgestreut wird, wobei eine zur Einstrahlung von Licht in den Lichtwellenleiter (4) geeignete Lichtquelle (6) vorgesehen ist, wobei die Signalverarbeitungseinrichtung (7) eine Recheneinrichtung zur Auswertung einer charakteristischen Eigenschaft des an der mindestens einen Messstelle (9A, 9B, 9C) zurückgestreuten Lichtes aufweist, wobei der Lichtwellenleiter (4) in dem Schiffstank (2) so angeordnet ist, dass die Anzahl derjenigen Messstellen (9B, 9C), die sich unterhalb des Flüssigkeitsspiegels (12) einer in dem Schiffstank (2) enthaltenen Flüssigkeit (11) befinden, von der Füllhöhe des Schiffstanks (2) abhängt, und wobei die Signalverarbeitungseinrichtung (7) aus einem von dem Sensor abgegebenen Signal zusätzlich mindestens ein Signal ableitet, welches eine Temperatur in dem Schiffstank (2) anzeigt, wobei der Lichtwellenleiter (4) in dem Schiffstank so angeordnet ist, dass sich mindestens eine Messstelle (9A) unabhängig von der Füllhöhe stets oberhalb des Flüssigkeitsspiegels (12) befindet, und dass das von dieser Messstelle (9A) zurückgestreute Lichtsignal von der Signalverarbeitungseinrichtung (7) als Referenzsignal zum Vergleich mit den von den übrigen Messstellen (9B, 9C) zurückgestreuten Lichtsignalen herangezogen wird.

2. Schiff nach Anspruch 1, wobei entlang des Lichtwellenleiters (4) eine Vielzahl von Messstellen (9A, 9B, 9C) an vorbestimmten Positionen ausgebildet sind.

3. Schiff nach Anspruch 1 oder 2, wobei jede Messstelle durch ein Bragg-Gitter (9A, 9B, 9C) mit einer für die Messstelle charakteristischen Gitterperiode d gebildet wird, und dass die Signalverarbeitungseinrichtung (7) einen Analysator aufweist, der als charakteristische Eigenschaft des zurückgestreuten Lichtes dessen spektrale Zusammensetzung ermittelt.

4. Schiff nach Anspruch 1 oder 2, wobei jede Messstelle durch ein Bragg-Gitter (9A, 9B, 9C) mit gleicher oder im wesentlichen gleicher Gitterperiode d gebildet wird, und wobei die Signalverarbeitungseinrichtung (7) einen Analysator aufweist, der als charakteristische Eigenschaft des zurückgestreuten Lichtes dessen spektrale Zusammensetzung ermittelt, und weiterhin eine Auswerteelektronik aufweist, welche eine Laufzeit des zurückgestreuten Lichtes seit der Einstrahlung des Lichts in den Lichtwellenleiter (4) ermittelt.

5. Schiff nach einem der Ansprüche 1 bis 4, wobei der Lichtwellenleiter (4) in dem Schiffstank (2) zumindest annähernd in vertikaler Richtung verlaufend angeordnet ist.

6. Schiff nach einem der Ansprüche 1 bis 5, wobei der Lichtwellenleiter (4) in oder an einem steifen Trägerkörper (10) angeordnet ist, dessen Form den Verlauf des Lichtwellenleiters (4) in dem Schiffstank (2) festlegt.

7. Schiff nach Anspruch 6, wobei der Trägerkörper (10) aus einem Rohr und/oder aus einem Stab mit einer Nut besteht.

8. Schiff nach Anspruch 6 oder 7, wobei der Lichtwellenleiter (4) austauschbar in einem Hohlraum des Trägerkörpers (10) angeordnet und durch den Trägerkörper (10) vor unmittelbarem Kontakt mit einer in dem Schiffstank (2) befindlichen Flüssigkeit (11) geschützt ist.

9. Schiff nach einem der Ansprüche 1 bis 8, wobei entlang des Lichtwellenleiters (4) und benachbart zu diesem eine Heizvorrichtung (13) angeordnet ist, durch welche eine vorbestimmbare Wärmeleistung pro Längeneinheit abgebbar ist.

10. Schiff nach einem der Ansprüche 3 bis 9, wobei die Signalverarbeitungseinrichtung das den Füllstand anzeigende Signal aus der Verschiebung der Lage der spektralen Intensitätsverteilung (16A, 16B, 16C) mindestens eines von einem Bragg-Gitter (9A, 9B, 9C) zurückgestreuten Lichtsignals gegenüber einer zugeordneten Referenzlage ableitet.

11. Schiff nach Anspruch 10, wobei die Signalverarbeitungseinrichtung (7) anhand des Ausmaßes der Verschiebung identifiziert, ob sich ein Bragg-Gitter (9A, 9B, 9C) oberhalb oder unterhalb des Flüssigkeitsspiegels (12) befindet, und wobei sie aufgrund der vorbestimmten Position jedes Bragg-Gitters (9A, 9B, 9C) entlang des Lichtwellenleiters (4) das die Füllhöhe des Schiffstanks (2) anzeigende Signal ableitet.

12. Schiff nach einem der Ansprüche 1 bis 11, wobei die Signalverarbeitungseinrichtung (7) jedes Signal, welches eine Temperatur anzeigt, aus einer Verschiebung der Lage der spektralen Intensitätsverteilung (16A, 16B, 16C) eines von einem Bragg-Gitter (9A, 9B, 9C) zurückgestreuten Lichtsignals gegenüber einer zugeordneten Referenzlage ableitet, und zwar auf der Basis mindestens eines in der Signalverarbeitungseinrichtung (7) gespeicherten funktionalen Zusammenhangs zwischen einer spektralen Verschiebung und einer Abweichung von einer Referenztemperatur.

13. Schiff nach einem der Ansprüche 1 bis 12, wobei der mindestens eine Schiffstank ein Brennstofftank, ein Ballasttank oder ein Ladungstank ist.

14. Schiff nach Anspruch 13, wobei der mindestens eine Schiffstank mehrere Brennstofftanks, welche zur Erwärmung enthaltenen Brennstoffs in Form von schwerem Heizöl eingerichtet sind, umfasst.

## Claims

1. Ship, in particular ocean-going ship, comprising at least one ship tank and at least one ship tank monitoring apparatus for monitoring a filling level and a temperature of a liquid in the at least one ship tank, wherein the ship tank monitoring apparatus comprises at least one sensor arranged in or on the ship tank and a signal processing device which is assigned to the sensor and which derives, from a signal output by the sensor, at least one signal indicating the filling level of the ship tank,
**characterized in that**
the sensor consists of an optical waveguide (4), along which a measurement location (9A, 9B, 9C) is formed at at least one predetermined position, at which measurement location light propagating in the optical waveguide (4) is backscattered in a direction opposite to its original propagation direction, wherein a light source (6) suitable for radiating light into the optical waveguide (4) is provided, wherein the signal processing device (7) has a computing device for evaluating a characteristic property of the light backscattered at the at least one measurement location (9A, 9B, 9C), wherein the optical waveguide (4) is arranged in the ship tank (2) such that the number of those measurement locations (9B, 9C) which are situated below the liquid level (12) of a liquid (11) contained in the ship tank (2) is dependent on the filling level of the ship tank (2), and wherein the signal processing device (7) additionally derives, from a signal output by the sensor, at least one signal indicating a temperature in the ship tank (2), wherein the optical waveguide (4) is arranged in the ship tank such that at least one measurement location (9A) is always situated above the liquid level (12) independently of the filling level, and that the light signal backscattered from said measurement location (9A) is used by the signal processing device (7) as a reference signal for comparison with the light signals backscattered from the rest of the measurement locations (9B, 9C).

2. Ship according to Claim 1, wherein a multiplicity of measurement locations (9A, 9B, 9C) are formed at predetermined positions along the optical waveguide (4).

3. Ship according to Claim 1 or 2, wherein each measurement location is formed by a Bragg grating (9A, 9B, 9C) having a characteristic grating period d for the measurement location and wherein the signal processing device (7) has an analyzer, which determines the spectral composition of the backscattered light as the characteristic property thereof.

4. Ship according to Claim 1 or 2, wherein each measurement location is formed by a Bragg grating (9A, 9B, 9C) having an identical or substantially identical grating period d, and wherein the signal processing device (7) has an analyzer which determines the spectral composition of the backscattered light as the characteristic property thereof, and furthermore has evaluation electronics which determine a propagating time of the backscattered light since the radiation of the light into the optical waveguide (4).

5. Ship according to any of Claims 1 to 4, wherein the optical waveguide (4) is arranged in the ship tank (2) in a manner running at least approximately in a vertical direction.

6. Ship according to any of Claims 1 to 5, wherein the optical waveguide (4) is arranged in or on a stiff carrier body (10), the form of which defines the course of the optical waveguide (4) in the ship tank (2).

7. Ship according to Claim 6, wherein the carrier body (10) consists of a tube and/or of a rod with a groove.

8. Ship according to Claim 6 or 7, wherein the optical waveguide (4) is arranged in an exchangeable manner in a cavity of the carrier body (10) and is protected by the carrier body (10) against direct contact with a liquid (11) situated in the ship tank (2).

9. Ship according to any of Claims 1 to 8, wherein a heating apparatus (13) is arranged along the optical waveguide (4) and adjacent to the latter, which heating apparatus can output a predeterminable heat power per unit length.

10. Ship according to any of Claims 3 to 9, wherein the signal processing device derives the signal indicating the filling level from the shift in the position of the spectral intensity distribution (16A, 16B, 16C) of at least one light signal backscattered from a Bragg grating (9A, 9B, 9C) relative to an assigned reference position.

11. Ship according to Claim 10, wherein the signal processing device (7) identifies on the basis of the extent of the shift whether a Bragg grating (9A, 9B, 9C) is situated above or below the liquid level (12) and wherein, on the basis of the predetermined position of each Bragg grating (9A, 9B, 9C) along the optical waveguide (4) said signal processing device derives the signal indicating the filling level of the ship tank (2).

12. Ship according to any of Claims 1 to 11, wherein the signal processing device (7) derives each signal indicating a temperature from a shift in the position of the spectral intensity distribution (16A, 16B, 16C) of a light signal backscattered from a Bragg grating (9A, 9B, 9C) relative to an assigned reference position, namely on the basis of at least one functional relationship between a spectral shift and a deviation from a reference temperature, said at least one functional relationship being stored in the signal processing device (7).

13. The ship according to any of Claims 1 to 12, wherein the at least one ship tank is a fuel tank, a ballast tank or a cargo tank.

14. Ship according to Claim 13, wherein the at least one ship tank comprises a plurality of fuel tanks designed for the heating of contained fuel in the form of heavy heating oil.

## Revendications

1. Bâtiment de navigation, notamment bâtiment de navigation maritime, comprenant au moins une cuve et au moins un dispositif de contrôle de cuve pour contrôler un niveau de remplissage et une température d'un liquide dans au moins une cuve du bâtiment de navigation, le dispositif de contrôle de la cuve du bâtiment de navigation comprenant au moins un capteur monté dans ou sur la cuve du bâtiment de navigation et un dispositif de traitement du signal, qui est associé au capteur et qui, d'un signal émis par le capteur, déduit au moins un signal indiquant un niveau de remplissage de la cuve du bâtiment de navigation, **caractérisé en ce que** le capteur est constitué d'un guide ( 4 ) d'ondes lumineuses, le long duquel est constitué, en au moins une position déterminée à l'avance, un point ( 9A, 9B, 9C ) de mesure où de la lumière se propageant dans le guide ( 4 ) d'ondes lumineuses est rétrodiffusée dans le sens contraire au sens de propagation d'origine, dans lequel il est prévu une source ( 6 ) lumineuse propre à injecter de la lumière dans le guide ( 4 ) d'ondes lumineuses, le dispositif ( 7 ) de traitement du signal ayant un dispositif informatique pour l'exploitation d'une propriété caractéristique de la lumière rétrodiffusée en le au moins un point ( 9A, 9B, 9C ) de mesure, le guide ( 4 ) d'ondes lumineuses étant disposé dans la cuve ( 2 ) du bâtiment de navigation, de manière à ce que le nombre des points ( 9A, 9B, 9C ) de mesure, qui se trouvent en dessous du niveau ( 12 ) d'un liquide ( 11 ) contenu dans la cuve ( 2 ) du bâtiment de navigation, dépende du niveau de remplissage de la cuve ( 2 ) du bâtiment de navigation et le dispositif ( 7 ) de traitement du signal déduisant d'un signal émis par le capteur, en outre, au moins un signal qui indique une température dans la cuve ( 2 ) du bâtiment de navigation, le guide ( 4 ) d'ondes lumineuses étant disposé dans la cuve ( 2 ) du bâtiment de navigation, de manière à ce qu'au moins un point ( 9A ) de mesure se trouve, indépendamment du niveau de remplissage, toujours au-dessus du niveau ( 12 ) du liquide et **en ce que** le signal lumineux rétrodiffusé par ce point ( 9A ) de mesure est utilisé par le dispositif ( 7 ) de traitement du signal comme signal de référence pour la comparaison avec les signaux lumineux rétrodiffusés par les autres points ( 9B, 9C ) de mesure.

2. Bâtiment de navigation suivant la revendication 1, dans lequel une pluralité de points ( 9A, 9B, 9C ) de mesure en des positions déterminées à l'avance sont constitués le long du guide ( 4 ) d'ondes lumineuses.

3. Bâtiment de navigation suivant la revendication 1 ou 2, dans lequel chaque point de mesure est formé par un réseau ( 9A, 9B, 9C ) de Bragg ayant une période d de réseau caractéristique du point de mesure et en ce que le dispositif ( 7 ) de traitement du signal a un analyseur, qui détermine, comme propriété caractéristique de la lumière rétrodiffusée, sa composition spectrale.

4. Bâtiment de navigation suivant la revendication 1 ou 2, dans lequel chaque point de mesure est formé par un réseau ( 9A, 9B, 9C ) de Bragg ayant la même ou sensiblement la même période d de réseau et le dispositif ( 7 ) de traitement du signal a un analyseur, qui détermine, comme propriété caractéristique de la lumière rétrodiffusée, sa composition spectrale et, en outre, a une électronique d'exploitation, qui détermine un temps de parcours de la lumière rétrodiffusée depuis l'injection de la lumière dans le guide ( 4 ) d'ondes lumineuses.

5. Bâtiment de navigation suivant l'une des revendications 1 à 4, dans lequel le guide ( 4 ) d'ondes lumineuses est disposé dans la cuve ( 2 ) du bâtiment de navigation en s'étendant, au moins à peu près, dans la direction verticale.

6. Bâtiment de navigation suivant l'une des revendications 1 à 5, dans lequel le guide ( 4 ) d'ondes lumineuses est disposé dans ou sur une pièce ( 10 ) formant support, dont la forme fixe le tracé du guide ( 4 ) d'ondes lumineuses dans la cuve ( 2 ) du bâtiment de navigation.

7. Bâtiment de navigation suivant la revendication 6, dans lequel la pièce ( 10 ) formant support est constituée d'un tuyau ou d'une barre ayant une rainure.

8. Bâtiment de navigation suivant la revendication 6 ou 7, dans lequel le guide ( 4 ) d'ondes lumineuses est monté de manière remplaçable dans une cavité de la pièce ( 10 ) formant support et est protégé par la pièce ( 10 ) formant support d'un contact direct avec un liquide se trouvant dans la cuve ( 2 ) du bâtiment de navigation.

9. Bâtiment de navigation suivant l'une des revendications 1 à 8, dans lequel il est disposé, le long du guide ( 4 ) d'ondes lumineuses et au voisinage de celui-ci, un dispositif ( 13 ) de chauffage, par lequel une puissance calorifique pouvant être déterminée à l'avance peut être cédée par unité de longueur.

10. Bâtiment de navigation suivant l'une des revendications 3 à 9, dans lequel le dispositif de traitement du signal déduit le signal indiquant le niveau du décalage de la position de la répartition ( 16A, 16B, 16C ) d'intensité spectrale d'au moins un signal lumineux rétrodiffusé par un réseau ( 9A, 9B, 9C ) de Bragg par rapport à une position de référence associée.

11. Bâtiment de navigation suivant la revendication 10, dans lequel le dispositif ( 7 ) de traitement du signal identifie, au moyen de l'étendue du décalage, si un réseau ( 9A, 9B, 9C ) de Bragg se trouve au-dessus ou en dessous du niveau ( 12 ) du liquide et il déduit, sur la base de la position déterminée à l'avance de chaque réseau ( 9A, 9B, 9C ) de Bragg le long du guide ( 4 ) d'ondes lumineuses, le signal indiquant le niveau de remplissage de la cuve ( 2 ) du bâtiment de navigation.

12. Bâtiment de navigation suivant l'une des revendications 1 à 11, dans lequel le dispositif ( 7 ) de traitement du signal déduit chaque signal qui indique une température d'un décalage de la position de la réparation ( 16A, 16B, 16C ) d'intensité spectrale d'un signal lumineux rétrodiffusé par un réseau ( 9A, 9B, 9C ) de Bragg par rapport à une position de référence associée et cela sur la base d'au moins une relation fonctionnelle mémorisée dans le dispositif ( 7 ) de traitement du signal entre un décalage spectral et un écart à une température de référence.

13. Bâtiment de navigation suivant l'une des revendications 1 à 12, dans lequel la au moins une cuve du bâtiment de navigation est une cuve de combustible, une citerne de ballast ou une cuve de fret.

14. Bâtiment de navigation suivant la revendication 13, dans lequel la au moins une cuve de bâtiment de navigation comprend plusieurs cuves de combustible, qui sont conçues pour réchauffer du combustible qu'elles contiennent sous forme de mazout lourd.
